# EUROPEAN PATENT SPECIFICATION

(11) **EP 3 909 810 B1**
(45) Date of publication and mention of the grant of the patent: **29.03.2023**
(21) Application number: 20203439.3
(22) Date of filing: 22.10.2020
(51) Int. Cl.: B60P 7/15

(54) **CLAMPING STRUCTURE OF CARGO SUPPORT**
KLEMMSTRUKTUR EINES FRACHTTRÄGERS
STRUCTURE DE SERRAGE DE SUPPORT DE CHARGEMENT

(30) Priority: 12.05.2020 CN 202010395252
(43) Date of publication of application: 17.11.2021
(73) Proprietor: ZheJiang TOPSUN Logistic Control Co., Ltd., Taizhou City, Zhejiang 317600 (CN)
(72) Inventor: RUAN, Buqin, Taizhou City, Zhejiang 317600 (CN); ZHU, Zhengzhong, Taizhou City, Zhejiang 317600 (CN)
(74) Representative: Elzaburu S.L.P.

(56) References cited:
- CN-A- 1 970 340
- DE-A1-102009 033 320

## Description

### Background of the invention

### Field of Invention

The invention belongs to the technical field of logistics transportation equipment, and relates to a cargo support, and more particularly to a clamping structure of a cargo support.

### Related Art

In the process of cargo transportation in a van, it is usually necessary to use a cargo support to block the cargoes to prevent the cargoes from moving back and forth in the carriage freely, causing the cargoes to collide with each other.

For example, the China patent titled "F-shaped cargo clamp and manufacturing method thereof" (application number: 200610119222.0; authorized publication number: CN1970340 B) discloses a structure of a cargo support, the cargo support includes a square tube (i.e.a cross beam) and two sets of F-shaped cargo clamps respectively disposed at two ends of the square tube. Wherein the F-shaped cargo clamp includes a bracket, a clamp plate and a handle. The bracket is L-shaped and composed of a static clamp plate and a positioning plate that are connected integrally. The two F-shaped cargo clamps are respectively connected to the two ends of the square tube through the bracket. The cargo support has the following drawbacks in usage practically.

Firstly, in the cargo support, the F-shaped cargo clamps are connected with the cross beam through a plurality of connecting holes disposed in the brackets of the F-shaped cargo clamps. The cross beam is inserted into the brackets and rivets are used to pass through the connecting holes to realize connection between the cross beam and the F-shaped cargo clamps. In such a structure, most of the structures of the F-shaped cargo clamp, such as a movable clamp plate, a sliding rod, a large spring, a small spring, and a guide structure for guiding the movable clamp plate are all entirely exposed, which causes poor aesthetics of the cargo support as a whole due to exposure of many parts of the cargo support.

Secondly, in an operation process, the handle needs to be pulled to drive the clamp plate to protrude and retract. In order to guide the movable clamp plate, the guide structure adopted is as follows: a raised link plate is disposed on a back of the positioning plate, the link plate has two sliding grooves with openings disposed back-to-back, an elongated groove with an opening at one end is disposed on a connecting plate of the movable clamp plate, and the link plate is sleeved in the elongated groove and can slide back and forth along the elongated groove. Since there will inevitably be some impurities in an environment in which the cargo support is being used, and the guide structure is directly exposed, the impurities can easily enter contact parts between the movable clamp plates and the sliding grooves with openings. After a long time usage, the impurities will affect smooth movement of the movable clamp plates, resulting in greatly affecting smooth operation of the cargo clamps.

Furthermore, in order to achieve guiding in the structure, the elongated groove with the opening at one end is provided on the connecting plate, and during operation of the handle, the link plate needs to slide back and forth along the elongated groove; with such configuration of the structure, in case an operator's hands inserts into the elongated groove incautiously, the hand will be caught easily, so there is a factor of poor safety.

At present, in order to avoid the problem of impurities affecting a movement stability of the movable clamp plate, the conventional technical solutions are:
1. Improve the processing technology, reduce a gap between the elongated groove with the opening and the connecting plate of the movable clamp plate, and also apply grease to block or reduce foreign impurities from entering the gap between the elongated groove with the opening and the movable clamp plate to ensure smooth sliding of the movable clamp plate.
2. Install a dust cover on the bracket to prevent dust from getting into the guide structure.
3. Regularly carry out dust removal treatment on the guide structure to avoid accumulation of impurities.

For another example, a patent document with Publication No. DE 1 02009033320A1 discloses a partition lock for securing parts of cargo or cargo in a cargo space. The partition lock has a beam body, which extends along a longitudinal direction L and two engaging devices arranged at the opposite ends of the beam body. The engaging devices are brought in engagement with complementary engaging devices of the loading chamber. At least one actuating device is arranged at the beam body, at least one of the two engaging devices being movable along the L longitudinal axis by means of the actuating device. The actuating device comprises a pull lever which is articulated with one of the engaging devices and an operating lever which is pivotably and displaceably connected to the pull lever by means of a receptacle. This document discloses the preambles of independent claims 1 and 9.

### Summary of the invention

In view of the above-mentioned problems in the prior art, one object of one embodiment of the invention is to disclose a clamping structure for a cargo support, the invention solves the problem of poor movement stability of a chuck of the existing cargo support.

According to the invention as defined by independent claim 1, the clamping structure of a cargo support having a cross beam, comprises:
a chuck with a guide portion and disposed at an end of the cross beam, the cross beam being connected with a handle, the handle being capable of driving the chuck to move back and forth along an axial direction of the cross beam so that the chuck switching between a clamped state and a released state, the cross beam is of hollow structure, the guide portion of the chuck extends into the cross beam, and inside the cross beam is further provided with a guide structure that cooperates with the guide portion and guides a movement of the chuck, the guide structure is a guide sleeve fixed inside the cross beam, and the guide portion of the chuck passes through the guide sleeve and forms a sliding fit with the guide sleeve, and there is at least one brace, the at least one brace located below the guide portion is fixedly connected inside the cross beam, the cross beam is provided with a first top plate located on an upper side of the guide sleeve, a bottom of the guide sleeve is connected on the at least one brace, and a top of the guide sleeve abuts and positions on the first top plate.

In the above-mentioned clamping structure of the cargo support, with the cross beam adopting a hollow structure, the guide portion of the chuck extends into the cross beam, so that the guide portion of the chuck moves inside the cross beam. On the basis of this structure, with the guide structure that cooperating with the guide portion also disposed inside the cross beam, avoiding a part of the guide structure cooperating with the guide portion to be directly exposed to the outside, so that the guide structure is not easily interfered by external impurities and always maintains high guiding stability, ultimately ensuring that the chuck is capable of moving more stably and smoothly, making the cargo support stable during usage and operate smoothly. By forming a sliding fit between the guide sleeve and the guide portion of the chuck to guide a movement of the chuck, the movement of the chuck is stable and smooth. Moreover, by disposing the guide sleeve inside the cross beam to form an embedded design, influence of external impurities on fitting surfaces between the guide sleeve and the guide portion can be effectively reduced, thereby improving a stability of guiding, and ensuring stable movement of the chuck.

By disposing the first top plate on the cross beam, and locating the first top plate on the upper side of the guide structure, an embedded design of the guide structure is realized, which contributes to flexible design of the guide structure; that is, with the guide structure being designed in different ways, cooperating sides between the guide structure and the guide portion can be covered by the first top plate and are not easily interfered by external impurities, ultimately improving a movement stability of the chuck. By disposing the at least one brace, the guide sleeve is supported and fixed, and at the same time, positioning of the guide sleeve by the first top plate fixes the guide sleeve stably, thereby stably guiding the chuck and stably moving the chuck.

In one embodiment of the above-mentioned clamping structure of the cargo support, a top of the cross beam further has a gap, a link is provided in the cross beam, one end of the handle extends into the gap and is articulated on an inner wall of the cross beam, the link is connected with the handle and the link is also connected with the guide portion of the chuck, and the handle drives the chuck to move through the link. By disposing the gap, and with the handle extending into the gap and articulating on the inner wall of the cross beam, the link can also be disposed inside the cross beam to connect with the handle. Such a design makes the guide portion of the chuck that connects with the link, and the guide structure that cooperates with the guide portion to be capable of being conveniently disposed inside the cross beam, ultimately achieving an object of improving a movement stability of the chuck. In addition, such a structure also avoids many components being exposed to the outside, making the cargo support more aesthetic as a whole, more likely to be favored by consumers, and enhancing market competitiveness.

In one embodiment of the above-mentioned clamping structure of the cargo support, the guide portion of the chuck includes two vertically disposed side guide plates and an upper guide plate connecting between top edges of the two side guide plates, the guide sleeve is made of plastic material, the guide sleeve has a through hole penetrating through both ends, a limit portion extending along a longitudinal direction of the through hole is further disposed on a bottom wall of the through hole, an upside down U-channel guide matching the guide portion is formed between an outer wall of the limit portion and a hole wall of the through hole, and the guide portion is slidably inserted in the upside down U-channel guide. By making the guide sleeve with plastic material, the guide sleeve will not rust, so there will be no jamming movement of the chuck caused by rust. The guide portion includes the two side guide plates and the upper guide plate, such a structure matches with the upside down U-channel guide to enable a larger matching area between the guide sleeve and the guide portion, thereby increasing stability and precision of guiding, and ensuring stable movement of the chuck. When the guide sleeve adopts the above-mentioned structure, a shape is more complicated; however, having the guide sleeve made of plastic material, it is easy to mold the guide sleeve into a structure with a complicated shape, which reduces the manufacturing costs on the basis of ensuring a guiding precision.

In one embodiment of the above-mentioned clamping structure of the cargo support, there are two braces, the two braces are disposed at a same height and are spaced apart from each other, the bottom of the guide sleeve is provided with underpinnings at positions corresponding to each of the two braces, and the underpinnings are respectively sleeved on corresponding braces. Preferably, the two braces are rivets, the bottom of the guide sleeve has four underpinnings, each of the underpinnings is provided with a through hole, one of the braces passes through the through holes on two of the underpinnings, and the other brace passes through the through holes on the other two underpinnings. Through such a design, the bottom of the guide sleeve has four points of support, thereby ensuring a stability of fixation of the guide sleeve and thus ensuring stable movement of the chuck.

In one embodiment of the above-mentioned clamping structure of the cargo support, the cross beam is a square tube with a rectangular cross section, the cross beam comprises two lateral plates disposed oppositely and parallel to each other, a second top plate is connected between top edges of the two lateral plates, and the first top plate is located at an end of the cross beam and is spaced apart from the second top plate to form the gap. A bottom plate is further connected between bottom edges of the two lateral plates to improve a structural stability of the cross beam. Disposition of the gap provides a space for the handle and the link to swing, and one end of the handle extends into the gap to be articulated with the lateral plates, thereby eliminating the structure of the bracket for articulating with the handle in the existing clamping structure, thus saving materials and reducing production costs.

In one embodiment of the above-mentioned clamping structure of the cargo support, the handle comprises two oppositely disposed side plates and a main plate connecting between top edges of the two side plates, front ends of the two side plates extend into the gap and are articulated on inner walls of the two lateral plates of the cross beam one to one. Preferably, the side plates of the handle and the lateral plates of the cross beam are articulated by rivets.

In one embodiment of the above-mentioned clamping structure of the cargo support, a limiter is further provided between the two side plates of the handle, the link is rod-shaped, the link passes through the limiter, a front end of the link is articulated with a rear end of the guide portion, a rear end of the link is threadly connected with an adjuster, and the link is further sleeved with a main spring located between the limiter and the adjuster. Since the link passes through the limiter provided on the handle, when the handle is pulled upward, the chuck can be driven to move forward to open a clamp opening. During usage, the chuck in an open state attaches an object to be clamped, the object to be clamped can be a clamped part of a carriage, and then the handle is pulled downward. During pulling of the handle, a size of the clamp opening gradually decreases, when a size of the clamp opening is reduced to equal to a thickness of the clamped part, the chuck no longer moves, and the limiter is pulled to continue to move toward the rear end of the link when the handle continues to be pulled downward, resulting in the main spring being compressed to form a clamping force.

In one embodiment of the above-mentioned clamping structure of the cargo support, the front end of the link has an articulated ball, an auxiliary spring is further sleeved on the link, the link is articulated with the rear end of the guide portion through the articulated ball, a stiffness coefficient of the auxiliary spring is less than a stiffness coefficient of the main spring, a first end of the auxiliary spring abuts on the articulated ball, and a second end of the auxiliary spring abuts on the limiter. When the handle is lifted upward to release the load, the auxiliary spring is capable of buffering the upward opening process of the handle, avoiding direct impact of the handle on the cross beam due to an action of the main spring during upward opening process of the handle, thereby avoiding damages of components or injury of operators.

According to the invention as defined by independent claim 9, the clamping structure of a cargo support having a cross beam, comprises:
a chuck with a guide portion and disposed at an end of the cross beam, the cross beam being connected with a handle, the handle being capable of driving the chuck to move back and forth along an axial direction of the cross beam so that the chuck switching between a clamped state and a released state, the cross beam is of hollow structure, the guide portion of the chuck extends into the cross beam, and inside the cross beam is further provided with a guide structure that cooperates with the guide portion and guides a movement of the chuck, the cross beam is provided with a first top plate located on an upper side of the guide portion, the guide structure comprises at least one brace fixed inside the cross beam, the at least one brace is located below the guide portion, a roller sleeve is rotatably sleeved on the at least one brace, a bottom surface of the guide portion is supported on the roller sleeve, and a top surface of the guide portion and a bottom surface of the first top plate form a sliding fit.

A sliding fit formed between the top surface of the guide portion and the bottom surface of the first top plate can be a contact or a small gap between the top surface of the guide portion and the bottom surface of the first top plate. Through such a design, the roller sleeve is capable of rotating during translation process of the guide portion to reduce friction, so that the chuck moves smoothly and stably.

In one embodiment of the above-mentioned clamping structure of the cargo support, there are two braces, each of the two braces is provided with the roller sleeve, and the two braces are disposed at a same height and are spaced apart from each other. Through such a design, the guide portion of the chuck is supported by two points, so that the guide structure guides the chuck more stably.

In one embodiment of the above-mentioned clamping structure of the cargo support, the cross beam is a square tube with a rectangular cross section, the cross beam comprises two lateral plates disposed oppositely and parallel to each other, the guide portion of the chuck includes two vertically disposed side guide plates and an upper guide plate connecting between top edges of the two side guide plates, bottom edges of the two side guide plates are supported on the roller sleeve, a top surface of the upper guide plate and the bottom surface of the first top plate form a sliding fit, and a distance between outer walls of the two side guide plates is slightly smaller than a distance between inner walls of the two lateral plates of the cross beam. With the guide portion having the upper guide plate, and the roller sleeve locating below the upper guide plate and being covered by the upper guide plate, external impurities are difficult to fall to reach cooperating surfaces between the roller sleeve and the side guide plates, so that the guide structure always guides the chuck stably. At the same time, in the guide structure, the first top plate and the roller sleeve cooperate to limit deviation of the guide portion in upward and downward directions, and by having a distance between the outer walls of the two side guide plates slightly smaller than a distance between the inner walls of the two lateral plates of the cross beam, deviation of the guide portion in left and right directions is limited. Such a design restricts deviation of the guide portion in upward and downward directions and left and right directions, thereby ensuring movement stability of the chuck.

Compared with the prior art, one embodiment of the clamping structure of the cargo support of the invention has the following advantages:
1. The cargo support is directly articulated with the cross beam through the handle extending into the cross beam, so that the link connecting the handle, the guide portion of the chuck and the guide structure for guiding the guide portion can all form a design embedded in the cross beam, influence of impurities on the guide structure can be avoided or reduced, so that the chuck moves stably and smoothly, and smooth operation of the cargo support is greatly improved.
2. The cargo support has the link, the guide structure, the main spring and the auxiliary spring disposing inside the cross beam, such a structure avoids many components being exposed to the outside, making the cargo support more aesthetic as a whole, more likely to be favored by consumers, and enhancing market competitiveness.
3. Since the guide structure of the cargo support is disposed inside the cross beam, and the first top plate is provided on the upper side of the guide structure, risk of an operator's hand touching a contact part between the guide structure and the chuck during operation can be greatly reduced, thereby a feature of preventing the hand being caught is provided to greatly improve the safety of operation.

### Brief description of the drawings

FIG. 1 is a front view of a first embodiment of a cargo support of the invention;
FIG. 2 is a partial perspective view of the first embodiment of the invention;
FIG. 3 is a partial exploded view of the first embodiment of the invention;
FIG. 4 is a top view of the first embodiment of the invention;
FIG. 5 is a partial cross-sectional view of A-A in FIG. 4;
FIG. 6 is a cross-sectional view of B-B in FIG. 4;
FIG. 7 is a perspective view of a chuck in the first embodiment of the invention;
FIG. 8 is a perspective view of a guide sleeve in the first embodiment of the invention;
FIG. 9 is a partial perspective view of a second embodiment of the invention;
FIG. 10 is a partial perspective view of the second embodiment of the invention;
FIG. 11 is a cross-sectional view of the second embodiment of the invention; and
FIG. 12 is a partial exploded view of the second embodiment of the invention.

### Detailed description of the invention

The technical solutions of the invention are further described below with reference to the specific embodiments of the invention in conjunction with the accompanied drawings, but the invention is not limited to the embodiments.

### Embodiment 1

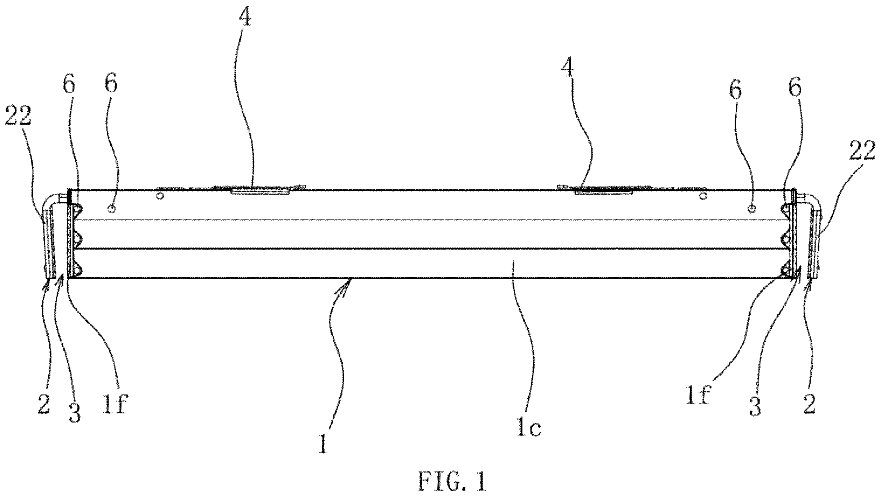

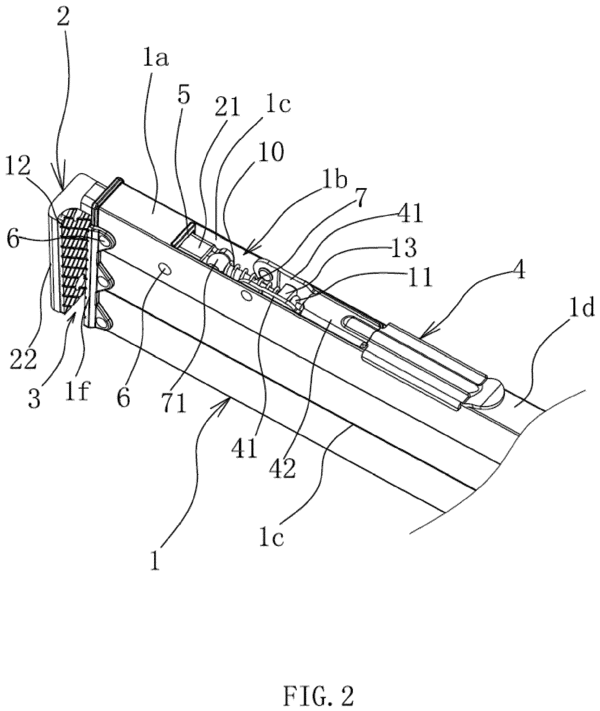

As shown in FIGS. 1 and 2, one embodiment of a cargo support of the invention includes a cross beam 1, and both ends of the cross beam 1 are respectively disposed with clamping structures with a same structure. The clamping structure includes a chuck 2 disposed at one end of the cross beam 1. The chuck 2 has a guide portion 21 and a clamping portion 22. The guide portion 21 is elongated and disposed along an axial direction of the cross beam 1. The cross beam 1 is of hollow structure, the guide portion 21 of the chuck 2 extends into the cross beam 1, and the clamping portion 22 is connected to one end of the cross beam 1, where the clamping portion 22 protrudes outward from the cross beam 1, and the clamping portion 22 is bent downward relative to the guide portion 21. In order to increase friction and ensure stability of clamping during a clamping process, an end face of the cross beam 1 is fixedly connected with a first rubber cushion 1f, and the clamping portion 22 is also fixed with a second rubber cushion 12 opposite to the first rubber cushion 1f. A clamp opening 3 is formed between the clamping portion 22 and the first rubber cushion 1f. In addition, the cross beam 1 is further connected with a handle 4 for driving the chuck 2 to move back and forth along the axial direction of the cross beam 1 to change a size of the clamp opening 3.

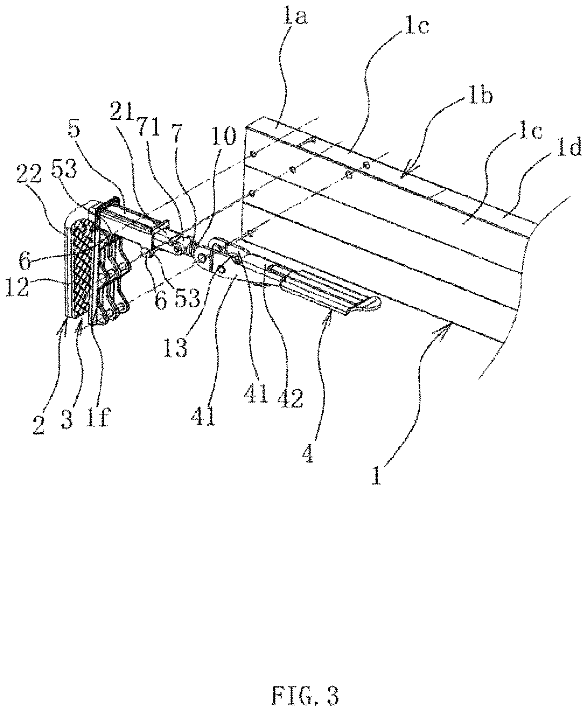

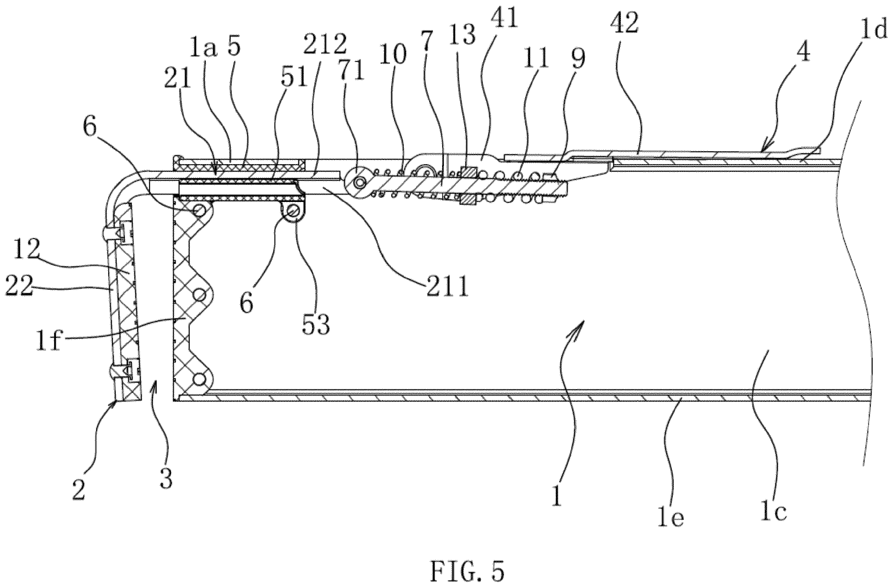

As shown in FIG. 2 and FIG. 3, one embodiment of the cross beam 1 is a square tube with a rectangular cross-section. The cross beam 1 includes two lateral plates 1c disposed oppositely and parallel to each other, and a second top plate 1d is connected between top edges of the two lateral plates 1c, as shown in FIG. 5. A bottom plate 1e is further connected between bottom edges of the two lateral plates 1c, a first top plate 1a located on an upper side of the guide portion 21 is provided on the cross beam 1, the first top plate 1a is located at an end of the cross beam 1 and is spaced apart from the second top plate 1d to form a gap 1b. One end of the handle 4 extends into the gap 1b and is articulated on an inner wall of the cross beam 1. Inside the cross beam 1 is further provided with a guide structure located on a lower side of the first top plate 1a that cooperates with the guide portion 21 and guides a movement of the chuck 2. In the clamping structure, a guide sleeve 5 matching with the guide portion 21 is also disposed inside the cross beam 1, and the first top plate 1a located on an upper side of the guide sleeve 5 is further disposed on the cross beam 1, thereby realizing an embedded design of the guide sleeve 5 to avoid direct exposure of matching parts between the guide sleeve 5 and the guide portion 21, so that the guide sleeve 5 is not easily interfered by external impurities and always maintains high guiding stability, ultimately ensuring more stable and smooth movement of the chuck 2, and making the cargo support stable during usage and smooth during operation.

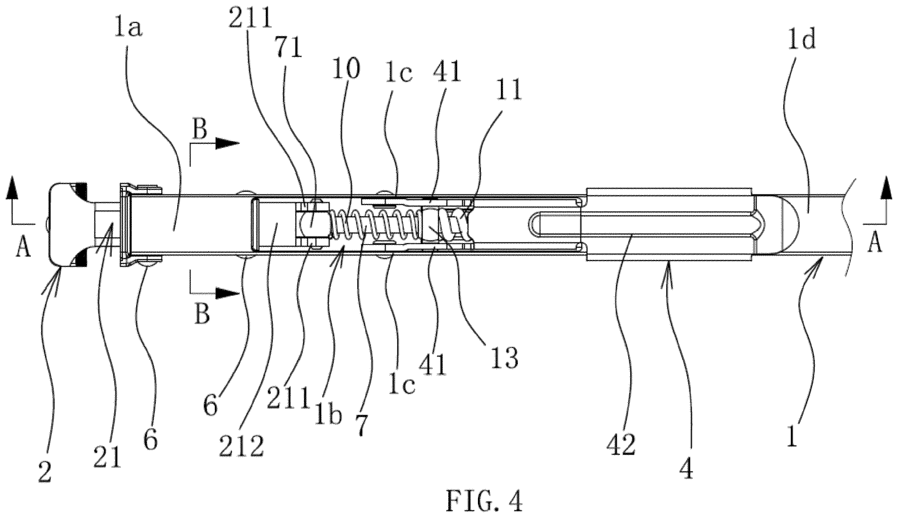

Specifically, as shown in FIGS. 3 to 6, one embodiment of the guide structure is the guide sleeve 5 fixed inside the cross beam 1. The guide sleeve 5 is made of plastic material, the guide portion 21 of the chuck 2 passes through the guide sleeve 5 and forms a sliding fit with the guide sleeve 5. Two braces 6 located below the guide portion 21 are fixedly connected inside the cross beam 1, and the two braces 6 are disposed at a same height and are spaced apart from each other. Preferably, the two braces 6 are rivets. A top of the guide sleeve 5 abuts and positions on the first top plate 1a, a bottom of the guide sleeve 5 has four underpinnings 53, each of the underpinnings 53 is provided with a through hole, one of the braces 6 passes through the through holes on two of the underpinnings 53, and the other brace 6 passes through the through holes on the other two underpinnings 53. By disposing the braces 6, the guide sleeve 5 is supported and fixed, while relying on positioning of the guide sleeve 5 by the first top plate 1a, the guide sleeve 5 is fixed stably, and the chuck 2 is stably guided to enable movement stability of the chuck 2.

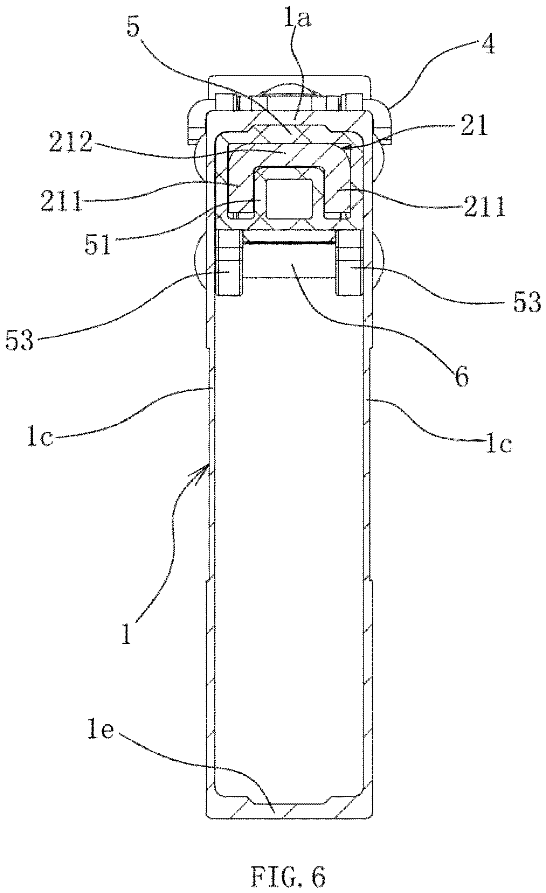

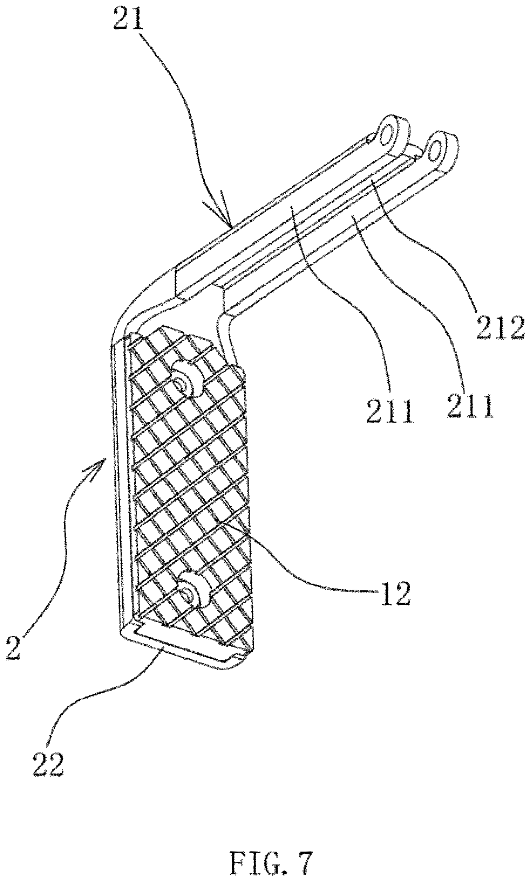

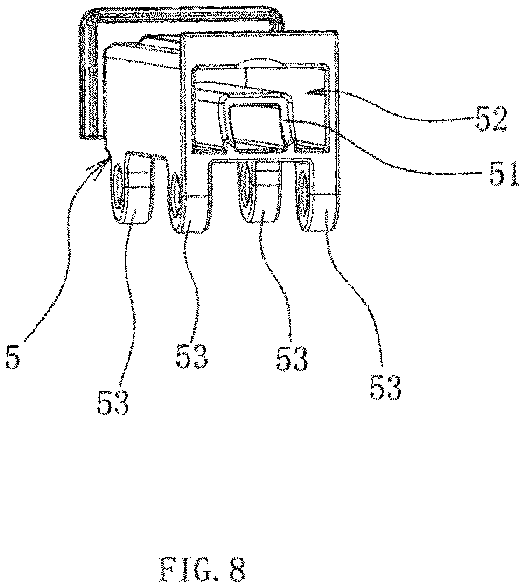

As shown in FIG. 6, FIG. 7 and FIG. 8, one embodiment of the guide portion 21 of the chuck 2 includes two vertically disposed side guide plates 211 and an upper guide plate 212 connected between top edges of the two side guide plates 211. The guide sleeve 5 has a through hole penetrating through both ends, a limit portion 51 extending along a longitudinal direction of the through hole is further disposed on a bottom wall of the through hole, an upside down U-channel guide 52 matching the guide portion 21 is formed between an outer wall of the limit portion 51 and a hole wall of the through hole, and the guide portion 21 is slidably inserted in the upside down U-channel guide 52. Such a structure enables a larger matching area between the guide sleeve 5 and the guide portion 21, thereby increasing stability and precision of guiding, and ensuring stable movement of the chuck 2.

In order to realize that one embodiment of the handle 4 drives the chuck 2 to move, as shown in FIGS. 3 and 5, a link 7 is further provided in the cross beam 1. The link 7 is connected with the handle 4 and the link 7 is also connected with the guide portion 21 of the chuck 2, and the handle 4 drives the chuck 2 to move through the link 7. Specifically, the handle 4 comprises two oppositely disposed side plates 41 and a main plate 42 connecting between top edges of the two side plates 41, front ends of the two side plates 41 extend into the gap 1b and are articulated on inner walls of the two lateral plates 1c of the cross beam 1 one to one. Preferably, the side plates 41 of the handle 4 and the lateral plates 1c of the cross beam 1 are articulated by rivets. A limiter 13 is further provided between the two side plates 41 of the handle 4, the link 7 is rod-shaped, the link 7 passes through the limiter 13, a front end of the link 7 is articulated with a rear end of the guide portion 21, a rear end of the link 7 is threadly connected with an adjuster 9, and the link 7 is further sleeved with a main spring 11 located between the limiter 13 and the adjuster 9. The front end of the link 7 has an articulated ball 71, an auxiliary spring 10 is further sleeved on the link 7, the link 7 is articulated with the rear end of the guide portion 21 through the articulated ball 71, a stiffness coefficient of the auxiliary spring 10 is less than a stiffness coefficient of the main spring 11, a first end of the auxiliary spring 10 abuts on the articulated ball 71, and a second end of the auxiliary spring 10 abuts on the limiter 13. Since the link 7 passes through the limiter 13 provided on the handle 4, when the handle 4 is pulled upward, the chuck 2 can be driven to move forward to open the clamp opening 3. During usage, the chuck 2 in an open state attaches an object to be clamped, the object to be clamped can be a clamped part of a carriage, and then the handle 4 is pulled downward. During pulling of the handle 4, a size of the clamp opening 3 gradually decreases, when a size of the clamp opening 3 is reduced to equal to a thickness of the clamped part, the chuck 2 no longer moves, and the limiter 13 is pulled to continue to move toward the rear end of the link 7 when the handle 4 continues to be pulled downward, resulting in the main spring 11 being compressed to form a clamping force. When the handle 4 is lifted upward to release the load, the auxiliary spring 10 is capable of buffering the upward opening process of the handle 4, avoiding direct impact of the handle 4 on the cross beam 1 due to an action of the main spring 11 during upward opening process of the handle 4, thereby avoiding damages of components or injury of operators.

### Embodiment 2

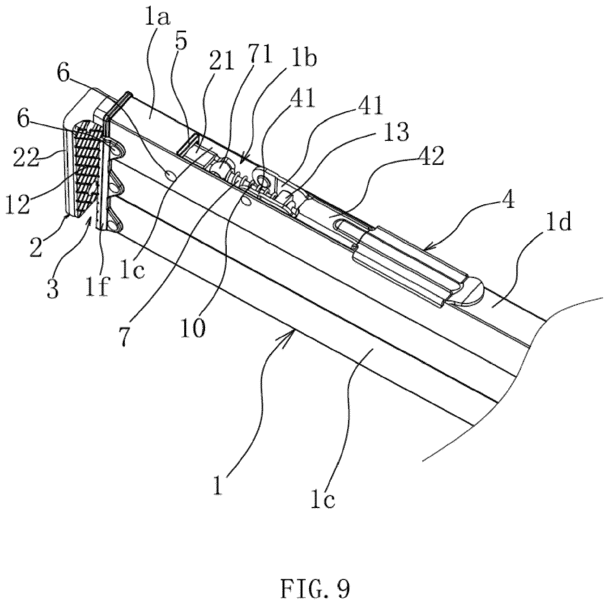

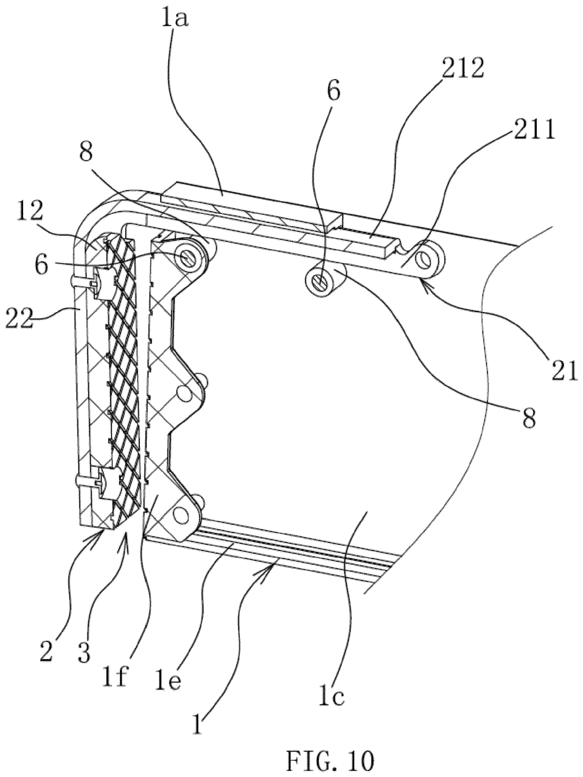

The structure and principle of this embodiment are basically the same as those of the first embodiment. The differences lie in the guide structure: As shown in FIGS. 9 and 10, the first top plate 1a located on the upper side of the guide portion 21 is provided on the cross beam 1, the guide structure includes the two braces 6 fixed at ends of the cross beam 1, the two braces 6 are both located below the guide portion 21, and the two braces 6 are disposed at a same height and are spaced apart from each other. A roller sleeve 8 is rotatably sleeved on each of the two braces 6, a bottom surface of the guide portion 21 is supported on the roller sleeve 8, and a top surface of the guide portion 21 and a bottom surface of the first top plate 1a form a sliding fit. A sliding fit formed between the top surface of the guide portion 21 and the bottom surface of the first top plate 1a can be a contact or a small gap between the top surface of the guide portion 21 and the bottom surface of the first top plate 1a. Through such a design, the roller sleeve 8 is capable of rotating during translation process of the guide portion 21 to reduce friction, so that the chuck 2 moves smoothly and stably.

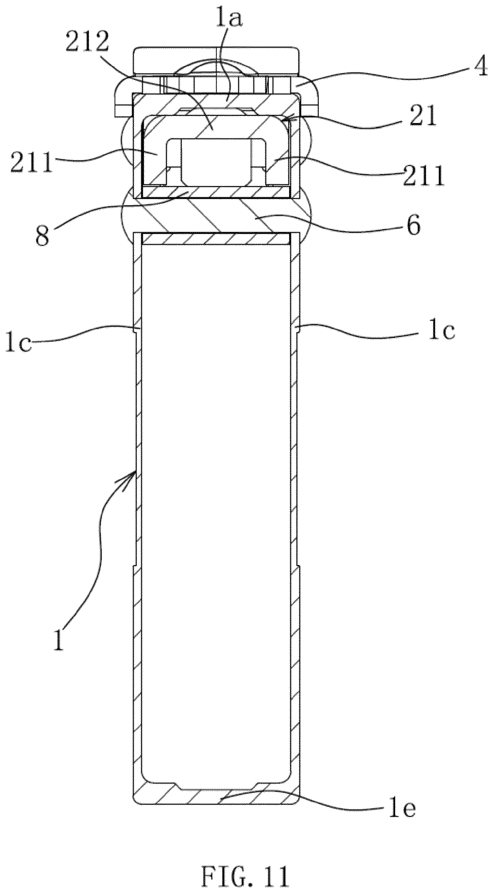

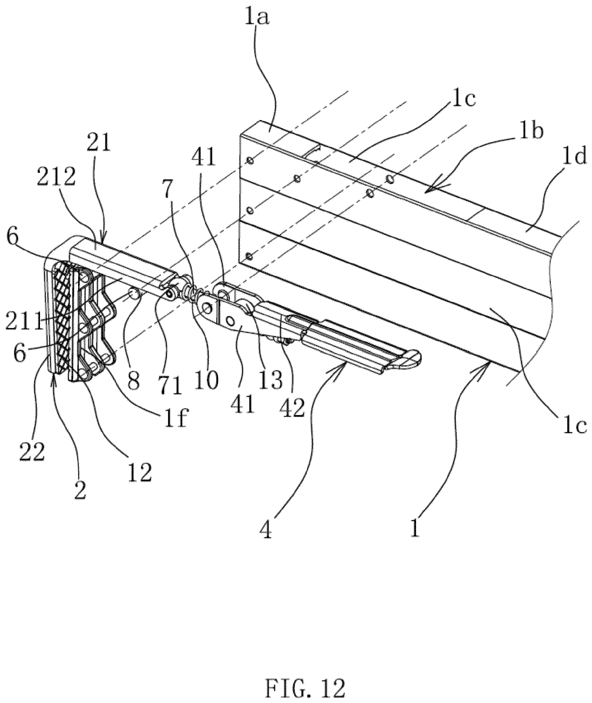

As shown in FIG. 11 and FIG. 12, the guide portion 21 of the chuck 2 includes the two vertically disposed side guide plates 211 and the upper guide plate 212 connecting between the top edges of the two side guide plates 211, bottom edges of the two side guide plates 211 are supported on the roller sleeve 8, a top surface of the upper guide plate 212 and the bottom surface of the first top plate 1a form a sliding fit, and a distance between outer walls of the two side guide plates 211 is slightly smaller than a distance between the inner walls of the two lateral plates 1c of the cross beam 1. With the guide portion 21 having the upper guide plate 212, and the roller sleeve 8 locating below the upper guide plate 212 and being covered by the upper guide plate 212, external impurities are difficult to fall to reach cooperating surfaces between the roller sleeve 8 and the side guide plates 211, so that the guide structure always guides the chuck 2 stably. At the same time, in the guide structure, the first top plate 1a and the roller sleeve 8 cooperate to limit deviation of the guide portion 21 in upward and downward directions, and by having a distance between the outer walls of the two side guide plates 211 slightly smaller than a distance between the inner walls of the two lateral plates 1c of the cross beam 1, deviation of the guide portion 21 in left and right directions is limited. Such a design restricts deviation of the guide portion 21 in upward and downward directions and left and right directions, thereby ensuring movement stability of the chuck 2.

### LIST OF REFERENCED PARTS

cross beam 1
first top plate 1a
gap 1b
lateral plate 1c
second top plate 1d
bottom plate 1e
first rubber cushion 1f
chuck 2
guide portion 21
side guide plate 211
upper guide plate 212
clamping portion 22
clamp opening 3
handle 4
side plate 41
main plate 42
guide sleeve 5
limit portion 51
upside down U-channel guide 52
underpinning 53
brace 6
link 7
articulated ball 71
roller sleeve 8
adjuster 9
auxiliary spring 10
main spring 11
second rubber cushion 12
limiter 13

## Claims

1. A clamping structure of a cargo support having a cross beam (1), comprising: a chuck (2) with a guide portion (21) and disposed at an end of the cross beam (1), the cross beam (1) being connected with a handle (4), the handle (4) being capable of driving the chuck (2) to move back and forth along an axial direction of the cross beam (1) so that the chuck (2) switching between a clamped state and a released state, the cross beam (1) is of hollow structure, the guide portion (21) of the chuck (2) extends into the cross beam (1), and inside the cross beam (1) is further provided with a guide structure that cooperates with the guide portion (21) and guides a movement of the chuck (2), **characterized in that** the guide structure is a guide sleeve (5) fixed inside the cross beam (1), and the guide portion (21) of the chuck (2) passes through the guide sleeve (5) and forms a sliding fit with the guide sleeve (5), and there is at least one brace (6), the at least one brace (6) located below the guide portion (21) is fixedly connected inside the cross beam (1), the cross beam (1) is provided with a first top plate (1a) located on an upper side of the guide sleeve (5), a bottom of the guide sleeve (5) is connected on the at least one brace (6), and a top of the guide sleeve (5) abuts and positions on the first top plate (1a).

2. The clamping structure of the cargo support as claimed in claim 1, wherein a top of the cross beam (1) further has a gap (1b), a link (7) is provided in the cross beam (1), one end of the handle (4) extends into the gap (1b) and is articulated on an inner wall of the cross beam (1) , the link (7) is connected with the handle (4) and the link (7) is also connected with the guide portion (21) of the chuck (2), and the handle (4) drives the chuck (2) to move through the link (7).

3. The clamping structure of the cargo support as claimed in claim 1, wherein the guide portion (21) of the chuck (2) includes two vertically disposed side guide plates (211) and an upper guide plate connecting between top edges of the two side guide plates (211), the guide sleeve (5) is made of plastic material, the guide sleeve (5) has a through hole penetrating through both ends, a limit portion (51) extending along a longitudinal direction of the through hole is further disposed on a bottom wall of the through hole, an upside down U-channel guide (52) matching the guide portion (21) is formed between an outer wall of the limit portion (51) and a hole wall of the through hole, and the guide portion (21) is slidably inserted in the upside down U-channel guide (52).

4. The clamping structure of the cargo support as claimed in claim 3, wherein there are two braces (6), the two braces (6) are disposed at a same height and are spaced apart from each other, the bottom of the guide sleeve (5) is provided with underpinnings (53) at positions corresponding to each of the two braces (6), and the underpinnings (53) are respectively sleeved on corresponding braces (6).

5. The clamping structure of the cargo support as claimed in claim 2, wherein the cross beam (1) is a square tube with a rectangular cross section, the cross beam (1) comprises two lateral plates (1c) disposed oppositely and parallel to each other, a second top plate (1d) is connected between top edges of the two lateral plates (1c), and the first top plate (1a) is located at an end of the cross beam (1) and is spaced apart from the second top plate (1d) to form the gap (1b).

6. The clamping structure of the cargo support as claimed in claim 5, wherein the handle (4) comprises two oppositely disposed side plates (41) and a main plate (42) connecting between top edges of the two side plates (41), front ends of the two side plates (41) extend into the gap (1b) and are articulated on inner walls of the two lateral plates (1c) of the cross beam (1) one to one.

7. The clamping structure of the cargo support as claimed in claim 6, wherein a limiter (13) is further provided between the two side plates (41) of the handle (4), the link (7) is rod-shaped, the link (7) passes through the limiter (13), a front end of the link (7) is articulated with a rear end of the guide portion (21), a rear end of the link (7) is threadly connected with an adjuster (9), and the link (7) is further sleeved with a main spring (11) located between the limiter (13) and the adjuster (9).

8. The clamping structure of the cargo support as claimed in claim 7, wherein the front end of the link (7) has an articulated ball (71), an auxiliary spring (10) is further sleeved on the link (7), the link (7) is articulated with the rear end of the guide portion (21) through the articulated ball (71), a stiffness coefficient of the auxiliary spring (10) is less than a stiffness coefficient of the main spring (11), a first end of the auxiliary spring (10) abuts on the articulated ball (71), and a second end of the auxiliary spring (10) abuts on the limiter (13).

9. A clamping structure of a cargo support having a cross beam (1), comprising: a chuck (2) with a guide portion (21) and disposed at an end of the cross beam (1), the cross beam (1) being connected with a handle (4), the handle (4) being capable of driving the chuck (2) to move back and forth along an axial direction of the cross beam (1) so that the chuck (2) switching between a clamped state and a released state, the cross beam (1) is of hollow structure, the guide portion (21) of the chuck (2) extends into the cross beam (1), and inside the cross beam (1) is further provided with a guide structure that cooperates with the guide portion (21) and guides a movement of the chuck (2), wherein the cross beam (1) is provided with a first top plate (1a) located on an upper side of the guide portion (21), **characterized in that** the guide structure comprises at least one brace (6) fixed inside the cross beam (1), wherein the at least one brace (6) is located below the guide portion (21), a roller sleeve (8) is rotatably sleeved on the at least one brace (6), a bottom surface of the guide portion (21) is supported on the roller sleeve (8), and a top surface of the guide portion (21) and a bottom surface of the first top plate (1a) form a sliding fit.

10. The clamping structure of the cargo support as claimed in claim 9, wherein there are two braces (6), each of the two braces (6) is provided with the roller sleeve (8), and the two braces (6) are disposed at a same height and are spaced apart from each other.

11. The clamping structure of the cargo support as claimed in claim 9, wherein the cross beam (1) is a square tube with a rectangular cross section, the cross beam (1) comprises two lateral plates (1c) disposed oppositely and parallel to each other, the guide portion (21) of the chuck (2) includes two vertically disposed side guide plates (211) and an upper guide plate connecting between top edges of the two side guide plates (211), bottom edges of the two side guide plates (211) are supported on the roller sleeve (8), a top surface of the upper guide plate and the bottom surface of the first top plate (1a) form a sliding fit, and a distance between outer walls of the two side guide plates (211) is slightly smaller than a distance between inner walls of the two lateral plates (1c) of the cross beam (1).

## Patentansprüche

1. Klemmstruktur einer Ladungsstütze mit einem Querträger (1), umfassend: ein Spannfutter (2) mit einem Führungsabschnitt (21), das an einem Ende des Querträgers (1) angeordnet ist, wobei der Querträger (1) mit einem Griff (4) verbunden ist, wobei der Griff (4) in der Lage ist, das Spannfutter (2) so anzutreiben, dass es sich entlang einer axialen Richtung des Querträgers (1) hin- und herbewegt, so dass das Spannfutter (2) zwischen einem geklemmten Zustand und einem gelösten Zustand umschaltet, wobei der Querträger (1) eine Hohlstruktur aufweist, wobei sich der Führungsabschnitt (21) des Spannfutters (2) in den Querträger (1) erstreckt und innerhalb des Querträgers (1) ferner mit einer Führungsstruktur versehen ist, die mit dem Führungsabschnitt (21) zusammenwirkt und eine Bewegung des Spannfutters (2) führt, **dadurch gekennzeichnet, dass** die Führungsstruktur eine Führungshülse (5) ist, die innerhalb des Querträgers (1) befestigt ist, und der Führungsabschnitt (21) des Spannfutters (2) durch die Führungshülse (5) verläuft und einen Gleitsitz mit der Führungshülse (5) bildet, und es ist mindestens eine Strebe (6) vorhanden, die mindestens eine Strebe (6), die sich unterhalb des Führungsabschnitts (21) befindet, ist fest innerhalb des Querträgers (1) verbunden, der Querträger (1) ist mit einer ersten oberen Platte (1a) versehen, die sich an einer Oberseite der Führungshülse (5) befindet, ein Boden der Führungshülse (5) ist mit der mindestens einen Strebe (6) verbunden, und eine Oberseite der Führungshülse (5) liegt an der ersten oberen Platte (1a) an und positioniert sie.

2. Klemmstruktur der Ladungsstütze nach Anspruch 1, wobei eine Oberseite des Querträgers (1) ferner einen Spalt (1b) aufweist, ein Verbindungsglied (7) ist in dem Querträger (1) vorgesehen, ein Ende des Griffs (4) erstreckt sich in den Spalt (1b) und ist an einer Innenwand des Querträgers (1) gelenkig gelagert, das Verbindungsglied (7) ist mit dem Griff (4) verbunden und das Verbindungsglied (7) ist auch mit dem Führungsabschnitt (21) des Spannfutters (2) verbunden, und der Griff (4) treibt das Spannfutter (2) an, um sich durch das Verbindungsglied (7) zu bewegen.

3. Klemmstruktur der Ladungsstütze nach Anspruch 1, wobei der Führungsabschnitt (21) des Spannfutters (2) zwei vertikal angeordnete Seitenführungsplatten (211) und eine obere Führungsplatte aufweist, die zwischen den oberen Kanten der zwei Seitenführungsplatten (211) verbunden ist, die Führungshülse (5) ist aus Kunststoffmaterial hergestellt, die Führungshülse (5) weist ein Durchgangsloch auf, das durch beide Enden hindurchgeht, einen Begrenzungsabschnitt (51), der sich entlang einer Längsrichtung des Durchgangslochs erstreckt, ferner an einer Bodenwand des Durchgangslochs angeordnet ist, eine auf dem Kopf stehende U-Kanalführung (52), die zu dem Führungsabschnitt (21) passt, ist zwischen einer Außenwand des Begrenzungsabschnitts (51) und einer Lochwand des Durchgangslochs ausgebildet, und der Führungsabschnitt (21) ist verschiebbar in die auf dem Kopf stehende U-Kanalführung (52) eingesetzt.

4. Klemmstruktur der Ladungsstütze nach Anspruch 3, wobei zwei Streben (6) vorhanden sind und die beiden Streben (6) auf einer gleichen Höhe angeordnet und voneinander beabstandet sind, wobei der Boden der Führungshülse (5) mit Unterfangungen (53) an Positionen versehen ist, die jeder der beiden Streben (6) entsprechen, und wobei die Unterfangungen (53) jeweils an entsprechenden Streben (6) befestigt sind.

5. Klemmstruktur der Ladungsstütze nach Anspruch 2, wobei der Querträger (1) ein Vierkantrohr mit einem rechteckigen Querschnitt ist, der Querträger (1) umfasst zwei seitliche Platten (1c), die einander gegenüberliegend und parallel zueinander angeordnet sind, eine zweite obere Platte (1d) ist zwischen den oberen Kanten der zwei seitlichen Platten (1c) verbunden und die erste obere Platte (1a) ist an einem Ende des Querträgers (1) angeordnet und von der zweiten oberen Platte (1d) beabstandet, um den Spalt (1b) zu bilden.

6. Klemmstruktur der Ladungsstütze nach Anspruch 5, wobei der Griff (4) zwei gegenüberliegende Seitenplatten (41) und eine Hauptplatte (42) umfasst, die zwischen den oberen Kanten der beiden Seitenplatten (41) verbunden sind, wobei sich die vorderen Enden der beiden Seitenplatten (41) in den Spalt (1b) erstrecken und an Innenwänden der beiden Seitenplatten (1c) des Querträgers (1) eins zu eins gelenkig gelagert sind.

7. Klemmstruktur der Ladungsstütze nach Anspruch 6, wobei ferner ein Begrenzer (13) zwischen den beiden Seitenplatten (41) des Griffs (4) vorgesehen ist, das Verbindungsglied (7) ist stabförmig, das Verbindungsglied (7) geht durch den Begrenzer (13) hindurch, ein vorderes Ende des Verbindungsglieds (7) ist mit einem hinteren Ende des Führungsabschnitts (21) gelenkig gelagert, ein hinteres Ende des Verbindungsglieds (7) ist mit einem Einstellglied (9) verschraubt, und das Verbindungsglied (7) ist ferner mit einer Hauptfeder (11) verbunden, die zwischen dem Begrenzer (13) und dem Einstellglied (9) angeordnet ist.

8. Klemmstruktur der Ladungsstütze nach Anspruch 7, wobei das vordere Ende des Verbindungsglieds (7) eine angelenkte Kugel (71) aufweist, eine Hilfsfeder (10) ferner an dem Verbindungsglied (7) mit Muffe befestigt ist, das Verbindungsglied (7) ist mit dem hinteren Ende des Führungsabschnitts (21) durch die angelenkte Kugel (71) gelenkig verbunden, ein Steifigkeitskoeffizient der Hilfsfeder (10) ist kleiner als ein Steifigkeitskoeffizient der Hauptfeder (11), ein erstes Ende der Hilfsfeder (10) liegt an der angelenkten Kugel (71) an und ein zweites Ende der Hilfsfeder (10) liegt an dem Begrenzer (13) an.

9. Klemmstruktur einer Ladungsstütze mit einem Querträger (1), umfassend: ein Spannfutter (2)
mit einem Führungsabschnitt (21), der an einem Ende des Querträgers (1) angeordnet ist, wobei der Querträger (1)
mit einem Griff (4) verbunden sind, wobei der Griff (4) in der Lage ist, das Spannfutter (2) entlang einer axialen Richtung des Querträgers (1) hin- und herzubewegen, so dass das Spannfutter (2)
zwischen einem gespannten Zustand und einem gelösten Zustand hin- und herschalten kann, der Querträger (1) ist eine
Hohlstruktur, der Führungsabschnitt (21) des Spannfutters (2) erstreckt sich in den Querträger (1) und innen ist
der Querträger (1) ferner mit einer Führungsstruktur versehen, die mit dem Führungsabschnitt
(21) zusammenarbeitet und eine Bewegung des Spannfutters (2) führt, wobei der Querträger (1)
mit einer ersten Deckplatte (1a) versehen ist, die sich auf einer Oberseite des Führungsabschnitts (21) befindet, **dadurch gekennzeichnet, dass**
eine Führungsstruktur mindestens eine Strebe (6) umfasst, die innerhalb des Querträgers (1) befestigt ist, wobei die mindestens
eine Strebe (6) unterhalb des Führungsabschnitts (21) angeordnet ist, eine Rollenhülse (8) ist drehbar an der mindestens einen Strebe (6) befestigt, eine untere Fläche des Führungsabschnitts (21) liegt an der Rollenhülse (8) auf und eine obere Fläche des Führungsabschnitts (21) und eine untere Fläche der ersten oberen Platte (1a) bilden einen Gleitsitz.

10. Klemmstruktur der Ladungsstütze nach Anspruch 9, wobei es zwei
Streben (6) gibt, wobei jede der beiden Streben (6) mit der Rollenhülse (8) versehen ist und die beiden Streben (6) auf einer gleichen Höhe angeordnet und voneinander beabstandet sind.

11. Klemmstruktur der Ladungsstütze nach Anspruch 9, wobei der
Querträger (1) ein Vierkantrohr mit einem rechteckigen Querschnitt ist, der Querträger (1) umfasst zwei Seitenplatten (1c), die einander gegenüberliegend und parallel zueinander angeordnet sind, der Führungsabschnitt (21) des Spannfutters (2) umfasst zwei vertikal angeordnete Seitenführungsplatten (211) und eine obere Führungsplatte, die zwischen den oberen Kanten der zwei Seitenführungsplatten (211) verbunden sind, die unteren Kanten der zwei Seitenführungsplatten (211) sind auf der Rollenhülse (8) abgestützt, eine obere Fläche der oberen Führungsplatte und die untere Fläche der ersten oberen Platte (1a) bilden einen Gleitsitz, und ein Abstand zwischen den Außenwänden der zwei Seitenführungsplatten (211) ist etwas kleiner als ein Abstand zwischen den Innenwänden der zwei Seitenplatten (1c) des Querträgers (1).

## Revendications

1. Structure de serrage d'un support de chargement ayant une traverse (1), comprenant : un mandrin (2) avec une partie de guidage (21) et disposé à une extrémité de la traverse (1), la traverse (1) étant reliée à une poignée (4), la poignée (4) étant capable d'entrainer le mandrin (2) pour se déplacer en va-et-vient le long d'une direction axiale de la traverse (1) de sorte que le mandrin (2) commutant entre un état serré et un état relâché, la traverse (1) est de structure creuse, la partie de guidage (21) du mandrin (2) s'étend dans la traverse (1), et à l'intérieur de la traverse (1) est en outre pourvue d'une structure de guidage qui coopère avec la partie de guidage (21) et guide un mouvement du mandrin (2), **caractérisé en ce que** la structure de guidage est une douille de guidage (5) fixée à l'intérieur de la traverse (1), et la partie de guidage (21) du mandrin (2) traverse la douille de guidage (5) et forme un ajustement coulissant avec la douille de guidage (5), et il y a au moins une entretoise (6), l'entretoise (6) située sous la partie de guidage (21) est reliée de manière fixe à l'intérieur de la traverse (1), la traverse (1) est pourvue d'une première plaque supérieure (1a) située sur un côté supérieur du manchon de guidage (5), un fond du manchon de guidage (5) est relié sur l'entretoise (6), et un haut du manchon de guidage (5) vient buter et se positionner sur la première plaque supérieure (1a).

2. Structure de serrage du support de chargement selon la revendication 1, dans laquelle un sommet de la traverse (1) comporte en outre un espace (1b), une bielle (7) est prévue dans la traverse (1), une extrémité de la poignée (4) s'étend dans l'espace (1b) et est articulée sur une paroi intérieure de la traverse (1), la bielle (7) est reliée à la poignée (4) et la bielle (7) est également reliée à la partie de guidage (21) du mandrin (2), et la poignée (4) entraine le mandrin (2) à se déplacer à travers la bielle (7).

3. Structure de serrage du support de chargement selon la revendication 1, dans laquelle la partie de guidage (21) du mandrin (2) comprend deux plaques de guidage latérales disposées verticalement (211) et une plaque de guidage supérieure reliant les bords supérieurs des deux plaques de guidage latérales (211), le manchon de guidage (5) est réalisé en matière plastique, le manchon de guidage (5) a un trou traversant pénétrant à travers les deux extrémités, une partie de limite (51) s'étendant le long d'une direction longitudinale du trou traversant est en outre disposée sur une paroi inférieure du trou traversant, un guide de canal en U renversé (52) correspondant à la partie de guidage (21) est formé entre une paroi extérieure de la partie de limite (51) et une paroi de trou du trou traversant, et la partie de guidage (21) est insérée de manière coulissante dans le guide de canal en U renversé (52).

4. Structure de serrage du support de chargement selon la revendication 3, dans laquelle il y a deux entretoises (6), les deux entretoises (6) sont disposées à la même hauteur et sont espacées l'une de l'autre, le fond du manchon de guidage (5) est pourvu de soutiens (53) à des positions correspondant à chacune des deux entretoises (6), et les soutiens (53) sont respectivement fourrés sur des entretoises correspondantes (6).

5. Structure de serrage du support de chargement selon la revendication 2, dans laquelle la poutre transversale (1) est un tube carré de section transversale rectangulaire, la poutre transversale (1) comprend deux plaques latérales (1c) disposées de manière opposée et parallèle l'une à l'autre, une seconde plaque supérieure (1d) est reliée entre les bords supérieurs des deux plaques latérales (1c), et la première plaque supérieure (1 a) est située à une extrémité de la poutre transversale (1) et est espacée de la seconde plaque supérieure (1d) pour former l'espace (1b).

6. Structure de serrage du support de chargement selon la revendication 5, dans laquelle la poignée (4) comprend deux plaques latérales (41) disposées de manière opposée et une plaque principale (42) reliant les bords supérieurs des deux plaques latérales (41), les extrémités avant des deux plaques latérales (41) s'étendent dans l'espace (1b) et sont articulées sur les parois intérieures des deux plaques latérales (1c) de la traverse (1) une à une.

7. Structure de serrage du support de chargement selon la revendication 6, dans laquelle un limiteur (13) est en outre prévu entre les deux plaques latérales (41) de la poignée (4), la biellette (7) est en forme de tige, la biellette (7) passe à travers le limiteur (13), une extrémité avant de la biellette (7) est articulée avec une extrémité arrière de la partie de guidage (21), une extrémité arrière de la biellette (7) est raccordée par filetage à un dispositif de réglage (9), et la biellette (7) est en outre chemisée avec un ressort principal (11) situé entre le limiteur (13) et le dispositif de réglage (9).

8. Structure de serrage du support de chargement selon la revendication 7, dans laquelle l'extrémité avant de la biellette (7) comporte une bille articulée (71), un ressort auxiliaire (10) est en outre chemisé sur la biellette (7), la biellette (7) est articulée avec l'extrémité arrière de la partie de guidage (21) à travers la bille articulée (71), un coefficient de rigidité du ressort auxiliaire (10) est inférieur à un coefficient de rigidité du ressort principal (11), une première extrémité du ressort auxiliaire (10) bute contre la bille articulée (71), et une seconde extrémité du ressort auxiliaire (10) bute contre le limiteur (13).

9. Structure de serrage d'un support de cargaison ayant une traverse (1), comprenant :
un mandrin (2)
avec une partie de guidage (21) et disposée à une extrémité de la traverse (1), la traverse (1)
étant reliée à une poignée (4), la poignée (4) étant capable d'entrainer le mandrin (2) se déplacent en va-et-vient le long d'une direction axiale de la traverse (1) de sorte que le mandrin (2)
passant d'un état serré à un état relâché, la traverse (1) est une structure creuse,
la partie de guidage (21) du mandrin (2) s'étend dans la traverse (1), et à l'intérieur de la traverse (1) est en outre pourvue d'une structure de guidage qui coopère avec la partie du guide
(21) et guide un mouvement du mandrin (2), dans lequel la poutre transversale (1)
est pourvu d'une première plaque supérieure (1a) située sur un côté supérieur de la partie de guidage (21), **caractérisé en ce que**
la structure de guidage comprend au moins une entretoise (6) fixée à l'intérieur de la poutre transversale (1), dans lequel au moins
une entretoise (6) est située au-dessous de la partie de guidage (21), un manchon de rouleau (8) est manchon rotatif sur ladite au moins une entretoise (6), une surface inférieure de la partie de guidage (21) est supportée sur le manchon de rouleau (8), et une surface supérieure de la partie de guidage (21) et une surface inférieure de la première plaque supérieure (1a) forment un ajustement coulissant.

10. Structure de serrage du support de cargaison selon la revendication 9, dans laquelle il y a deux
des entretoises (6), chacune des deux entretoises (6) étant pourvue du manchon de rouleau (8), et les deux entretoises (6) étant disposées à la même hauteur et espacées l'une de l'autre.

11. Structure de serrage du support de chargement selon la revendication 9, dans laquelle la
poutre transversale (1) est un tube carré à section transversale rectangulaire, la poutre transversale (1) comprend deux plaques latérales (1c) disposées à l'opposé et parallèles l'une à l'autre, la partie de guidage (21) du mandrin (2) comprend deux plaques de guidage latérales (211) disposées verticalement et une plaque de guidage supérieure reliant les bords supérieurs des deux plaques de guidage latérales (211), les bords inférieurs des deux plaques de guidage latérales (211) sont supportés sur le manchon de rouleau (8), une surface supérieure de la plaque de guidage supérieure et la surface inférieure de la première plaque supérieure (1 a) forment un ajustement coulissant, et une distance entre les parois extérieures des deux plaques de guidage latérales (211) est légèrement inférieure à une distance entre les parois intérieures des deux plaques latérales (1c) de la poutre transversale (1).
